# EUROPÄISCHE PATENTSCHRIFT

(11) **EP 2 605 958 B1**
(45) Veröffentlichungstag und Bekanntmachung des Hinweises auf die Patenterteilung: **30.11.2016**
(21) Anmeldenummer: 11720437.0
(22) Anmeldetag: 11.05.2011
(51) Int. Cl.: B63H 3/06, F03D 7/04

(54) **VERSTELLPROPELLER ODER -REPELLER**
ELECTRIC PITCH CHANGE SYSTEM FOR PROPELLER
ENGIN ÉLECTRIQUE DE CHANGEMENT DU PAS D'HÉLICE

(30) Priorität: 17.08.2010 DE 102010039394
(43) Veröffentlichungstag der Anmeldung: 26.06.2013
(73) Patentinhaber: Siemens Aktiengesellschaft, 80333 München (DE)
(72) Erfinder: KRACKHARDT, Ernst-Christoph, 22869 Schenefeld (DE); MÜLLER, Christian Norbert, 22969 Witzhave (DE); SCHRÖDER, Dierk, 24238 Selent (DE)
(86) Internationale Anmeldenummer: PCT/EP2011/057607
(87) Internationale Veröffentlichungsnummer: WO 2012/022501

(56) Entgegenhaltungen:
- EP-A1- 0 652 154
- DD-A5- 291 733
- DE-A1- 1 931 158
- DE-A1-102007 016 023
- GB-A- 165 132

## Beschreibung

Die Erfindung betrifft einen Verstellpropeller oder -repeller mit einer Nabe mit daran befestigten Propeller- bzw. Repellerblättern mit veränderbarer Steigung und mit einer Verstelleinrichtung zur Veränderung der Steigung der Blätter. Die Erfindung betrifft ferner einen Gondelantrieb mit einem derartigen Verstellpropeller sowie eine Windenergieanlage mit einem derartigen Verstellrepeller.

Schwimmende oder tauchende Einrichtungen, wie z.B. Schiffe, oder Windenergieanlagen können stark unterschiedlichen Betriebsbedingungen ausgesetzt sein. Bei diesen stark unterschiedlichen Betriebsbedingungen kann es sich beispielsweise um unterschiedliche Schub- und Geschwindigkeitsanforderungen handeln, wie sie bei einer Eisfahrt und einer Freifahrt eines Schiffes vorliegen. Bei einer Eisfahrt wird ein vergleichsweise hoher Schub bei geringer Geschwindigkeit (bzw. Fortschrittsgrad) und bei einer Freifahrt wird ein vergleichsweise geringer Schub bei hoher Geschwindigkeit (bzw. Fortschrittsgrad) benötigt. Stark unterschiedliche Betriebsbedingungen können aber beispielsweise auch durch stark unterschiedliche Beladungs- bzw. Belastungszustände oder Einsatzprofile (z.B. Patrouillenfahrt und Marschfahrt bei einem Schiff) verursacht sein. Ein anderes Beispiel ist bei einem Segelschiff eine (lastlose) Umschaltung eines Propellers von einer Segelstellung in eine Propulsionsstellung.

So wird beispielsweise beim Betrieb von Schiffen im Eis in der Regel die gesamte Leistung der Antriebsmaschine zum Vortrieb benötigt. Die Leistung der Maschine wird dabei durch das Produkt von Drehzahl und Drehmoment bestimmt. Um bei einer Eisfahrt die maximale Leistung zur Überwindung des durch das Eis hervorgerufenen Widerstandes bereitstellen zu können, ist die Drehzahl des Motors so zu wählen, dass eine maximale Leistung erreicht wird. Bei einem Elektromotor ist dies in der Regel bei maximaler Drehzahl (ohne Feldschwächebetrieb) gegeben. Dies bedeutet, dass der Propeller auf einen geringen Fortschrittsgrad im Wasser bei maximaler Drehzahl des Motors (ohne Feldschwächebetrieb) ausgelegt bzw. eingestellt ist. Für eine Freifahrt, d.h. für eine Fahrt auf offenem Meer oder offener See, gibt es dann insbesondere bei permanent erregten Elektromotoren kaum Möglichkeiten, die Drehzahl zu steigern. Hierdurch sind auch bei Freifahrt nur geringe Geschwindigkeiten erzielbar.

Die DE 101 357 11 A1 offenbart zur Lösung dieses Problems einen Antriebsstrang für eine Wellenanlage eines eisbrechenden oder eines im Eisgang verkehrenden Schiffes, bei dem eine Brennkraftmaschine, an deren Abtriebswelle ein Untersetzungsgetriebe angeschlossen ist, welches abtriebsseitig auf eine Propellerwelle wirkt, und zusätzlich ein an die Abtriebswelle der Brennkraftmaschine angeschlossener Rotor eines elektrischen Generators vorhanden ist. Bei einer Eisfahrt wird hierbei zum einen die Propellersteigung zurückgenommen und andererseits die elektrische Last des Generators verringert. Durch diese Maßnahmen kann ein Absinken der Motordrehzahl unter einen bestimmten Wert verhindert werden.

Aus der DE 198 347 36 A1 ist ein Gondelantrieb bekannt, bei dem für einen eisfreien Navigationszeitraum ein Propellermantel um den Antriebspropeller des Gondelantriebs montiert ist. Bei einer Navigation zu Eisbedingungen wird der Propellermantel entfernt. Die Leistungsaufnahme des Propellers wird während des Mantelbetriebs und des mantelfreien Betriebs konstant gehalten. Hierzu wird die Blattsteigung des Propellers bei Freifahrt (d.h. bei Mantelbetrieb) vergrößert und bei einer Eisfahrt (d.h. bei mantelfreiem Betrieb) verringert.

Die Verstelleinrichtung für die Verstellung der Steigung der Propellerblätter bei einem Gondelantrieb umfasst üblicherweise - wie z.B. in der WO 2005/021374 A1 offenbart - eine hydraulische Antriebs- und Regeleinrichtung. Diese erfordert jedoch eine Ausbildung der Propellerwelle als Hohlwelle und eine Einführung von Hydrauliköl in die in dem Hohlraum der Hohlwelle angeordneten Steuer- und Antriebsleitungen zur hydraulischen Verstellnabe. Hierzu besteht jedoch in Gondelantrieben, insbesondere wenn in dem Gondelgehäuse ein elektrischer Antriebsmotor zum Antrieb der Propellerwelle untergebracht ist und bei Verwendung von zwei Propellern, kein Platz. Gleichzeitig besteht auch das Risiko einer Ölleckage im Gondelgehäuse.

Ein weiteres Beispiel des Standes der Technik wird in DD 291 733 dargestellt.

Es ist deshalb Aufgabe vorliegender Erfindung, einen Verstellpropeller oder -repeller anzugeben, der mit geringem technischen Aufwand und geringem Platzbedarf sowie ohne Gefahr von Leckagen in einem ihn an einer Einrichtung haltenden Bauteil, z.B. in einem Gondelgehäuses, durch eine Änderung der Steigung der Blätter an unterschiedliche Betriebsbedingungen anpassbar ist.

Die Lösung dieser Aufgabe gelingt durch einen Verstellpropeller oder -repeller gemäß Patentanspruch 1. Vorteilhafte Ausgestaltungen des Verstellpropellers bzw. -repellers sind Gegenstand der Unteransprüche 2 bis 10. Ein Gondelantrieb mit einem derartigen Verstellpropeller ist Gegenstand der Ansprüche 11 bis 14 und eine Windenergieanlage mit einem derartigen Verstellrepeller ist Gegenstand des Anspruchs 15.

Die Erfindung geht hierbei von der Erkenntnis aus, dass eine vollumfängliche Verstellung der Steigung der Blätter oft nicht notwendig ist, da in den meisten Fällen, speziell bei elektrischen Propulsionsantrieben bzw. Generatoren, nur eine zahlenmäßig begrenzte Anzahl von unterschiedlichen Betriebspunkten, oftmals sogar nur genau zwei Betriebspunkte (beispielsweise ein Betriebspunkt für die Eisfahrt und ein Betriebspunkt für die Freifahrt oder ein Betriebpunkt für eine hohe Beladung oder Belastung und ein Betriebspunkt für eine geringe Beladung oder Belastung) durch den Propeller abgebildet werden muss. Wenn nur diese zahlenmäßig begrenzte Anzahl von Betriebspunkten abgedeckt werden muss, insbesondere auch wenn ein Umschalten zwischen den Betriebspunkten ohne Last auf dem Propeller bzw. Repeller möglich ist, können die konstruktiven Maßnahmen für eine Verstellung der Steigung der Blätter einfach gehalten werden. Eine Geschwindigkeit unter Schub kann dann in einem weiten Bereich auch durch eine Drehzahlvariation der Antriebsmaschine für die Propellerwelle, insbesondere eines Elektromotors, vorgenommen werden.

Durch die Verwendung lediglich einer elektrischen Antriebseinrichtung zur Bewegung der Blätter, insbesondere zur Bewegung der Blätter ohne Last auf dem Propeller, sowie einer elektrisch betätigbaren Verriegelungseinrichtung kann die Verstelleinrichtung vergleichsweise klein und kompakt ausgebildet werden. Durch die Verwendung einer Verriegelungseinrichtung muss die elektrische Antriebseinrichtung außerdem nur zur Verstellung der Blattsteigung aktiviert werden. Die Leistung und somit Baugröße der elektrischen Antriebseinrichtung sowie ihr elektrischer Energiebedarf können somit relativ klein gehalten werden. Es ist hierdurch möglich, die Verstelleinrichtung in der Nabe anzuordnen, so dass kein Platz hierfür im Inneren eines den Verstellpropeller bzw. -repeller haltenden Bauteils, z.B. eines Gondelgehäuses, benötigt wird. Es ist sogar möglich, die geringe von der Verstelleinrichtung benötigte elektrische Energie mittels einer Energieübertragungseinrichtung induktiv aus einem Innenraum des den Verstellpropeller oder -repeller haltenden Bauteils (z.B. eines Gondelgehäuses) zu der Verstelleinrichtung in der Nabe zu übertragen.

Gemäß einer besonders kompakten, platzsparenden und zugleich konstruktiv einfachen Ausgestaltung weist die elektrische Antriebseinrichtung einen ersten elektrischen Ringmotor mit einem ringförmigen Läufer und einem ringförmigen Stator, die gleichachsig mit der Drehachse des Verstellpropellers bzw. - repellers sind, und einen Antriebsmechanismus zur Umwandlung einer Drehbewegung des Läufers in eine Drehbewegung der Blätter um ihre Längsachse auf.

Der Antriebsmechanismus umfasst dabei gemäß einer konstruktiv besonders einfachen Ausgestaltung ein in Richtung der Drehachse bewegliches Joch. Der erste elektrische Ringmotor kann das Joch dann beispielsweise über ein Bewegungsgewinde in Richtung der Drehachse des Propellers bzw. Repellers bewegen und somit (z.B. über Gleitsteine oder ein geeignetes Gestänge) eine Drehbewegung der Blätter bewirken.

Alternativ kann der Antriebsmechanismus auch ein um die Drehachse drehbares Joch umfassen. Wenn der Läufer des elektrischen Ringmotors drehfest mit dem Joch verbunden ist, kann durch eine Drehung des Läufers eine Drehung des Jochs und somit (z.B. über Gleitsteine oder ein geeignetes Gestänge) eine Drehbewegung der Blätter bewirkt werden.

Auch auf Seite der Verriegelung ist eine besonders hohe Kopaktheit und gleichzeitig einfache Konstruktion dadurch möglich, dass die Verriegelungseinrichtung in Richtung der Drehachse bewegbare Bolzen umfasst und der Läufer des ersten Ringmotors Öffnungen zur Aufnahme der Bolzen aufweist.

Die Verriegelungseinrichtung umfasst dabei gemäß einer konstruktiv besonders einfachen und platzsparenden Ausgestaltung zur elektrischen Betätigung einen zweiten elektrischen Ringmotor mit einem ringförmigen Stator und einem ringförmigen Läufer, die gleichachsig mit Drehachse des Verstellpropellers bzw. -repellers sind, und einen Antriebsmechanismus zur Umwandlung einer Drehbewegung des Läufers in eine Bewegung der Bolzen in Richtung der Drehachse.

Gemäß einer alternativen konstruktiv sehr einfachen Ausgestaltung kann die elektrische Antriebseinrichtung auch zumindest einen elektrischen Linearmotor mit einem Läufer und einem Stator sowie einen Antriebsmechanismus zur Umwandlung einer Linearbewegung des Läufers in eine Drehbewegung der Blätter um ihre Längsachse aufweisen.

Die Verriegelungseinrichtung kann dann eine in Umfangsrichtung der Drehachse des Verstellpropellers bzw. -repellers drehbare Scheibe zur Fixierung des Antriebsmechanismus oder des Linearmotors in Bezug auf eine Bewegung in Richtung der Drehachse aufweisen.

Aufgrund des geringen Energiebedarfs der Verstelleinrichtung umfasst die Verstelleinrichtung von Vorteil eine Energieübertragungseinrichtung zur induktiven Übertragung von elektrischer Energie von außerhalb des Propellers bzw. Repellers (beispielsweise aus einem Innenraum eines den Verstellpropeller haltenden Bauteils wie z.B. eines Gondelgehäuses) zu der Verstelleinrichtung. Die Energieübertragungseinrichtung kann beispielsweise in Form eines zu der Drehachse des Verstellpropellers bzw. -repellers gleichachsigen Generators ausgebildet sein, dessen Ständerteil in einem Innenraum des Bauteils, z.B. des Gondelgehäuses, angeordnet ist und für die Dauer der Blattverstellung unter Strom gesetzt wird, während der die Verstelleinrichtung speisende Läuferteil mit der Nabe umläuft.

Zur Erzielung eines besonders geringen elektrischen Energieverbrauchs ist die Verstelleinrichtung bevorzugt derart ausgebildet, dass bei einer weitestgehend lastlosen (d.h. der Antriebsmotor bzw. der Generator gibt keine Leistung ab bzw. nimmt sie nicht auf) Bewegung der Blätter durch die elektrische Antriebseinrichtung die Verriegelungseinrichtung deaktiviert ist und bei einer Verriegelung der Blattsteigung durch die Verriegelungseinrichtung die elektrische Antriebseinrichtung deaktiviert ist.

Ein vorstehend beschriebener Verstellpropeller kann grundsätzlich für jede Art von Antriebssystemen für schwimmende oder tauchende Einrichtungen wie z.B. für konventionelle Wellenanlagen und Querstrahlanlagen Verwendung finden. Eine besonders vorteilhafte Anwendung ist die Anwendung für ein Segelschiff mit einer (lastlosen) Umschaltung von einer Segelstellung in eine Propulsionsstellung.

Bevorzugte Verwendungen liegen jedoch überall dort, wo eine Propeller- bzw. Repellerwelle mit dem daran angeordneten Verstellpropeller bzw. -repeller in einem gondelförmigen Gehäuse gelagert ist und somit der Einsatz einer hydraulischen Verstelleinrichtung für die Propeller- bzw. Repellerblätter problematisch ist. Dies ist vor allem bei Gondelantrieben für schwimmende Einrichtungen und in Gondeln von Windenergieanlagen der Fall.

Ein erfindungsgemäßer Gondelantrieb zum Antrieb einer schwimmenden Einrichtung umfasst dann ein Unterwassergehäuse mit einer darin drehbar gelagerten Propellerwelle und einem an einem Ende der Propellerwelle angeordneten vorstehend beschriebenen Verstellpropeller.

Gemäß einer besonders vorteilhaften Ausgestaltung weist der Gondelantrieb einen in dem Gehäuse angeordneten elektrischen Motor zum Antrieb der Propellerwelle auf. Der elektrische Motor ist dabei bevorzugt als ein permanentmagnetisch erregter Motor ausgebildet.

Der Gondelantrieb kann dabei auch einen an dem anderen Ende der Propellerwelle angeordneten weiteren Verstellpropeller wie vorstehend beschrieben aufweisen. Die beiden Propeller können sich dabei gleichsinnig oder auch gegensinnig drehen.

Eine erfindungsgemäße Windenergieanlage umfasst ein Gondelgehäuse mit einer darin drehbar gelagerten Repellerwelle und einen an einem Ende der Repellerwelle angeordneten vorstehend beschriebenen Verstellrepeller.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Darin zeigen:
- FIG 1: einen Gondelantrieb mit einem erfindungsgemäßen Verstellpropeller,
- FIG 2: eine Detailansicht der Verstelleinrichtung des Verstellpropellers von Figur 1 und
- FIG 3: eine Windenergieanlage mit einem erfindungsgemäßen Verstellrepeller.

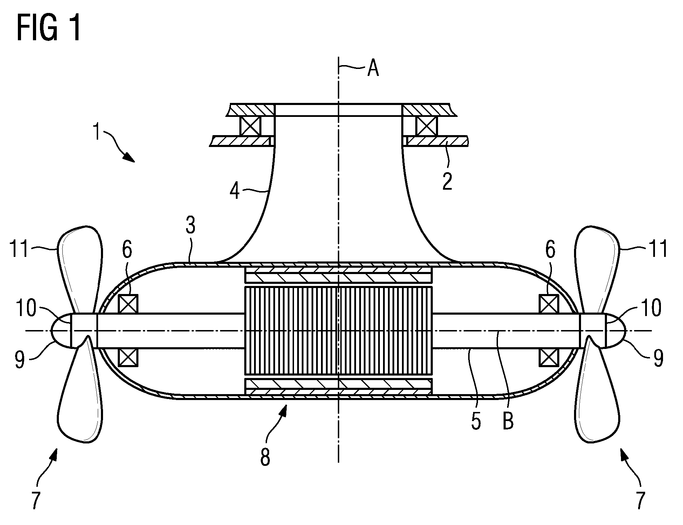

Die Figur 1 zeigt in vereinfachter und schematischer Darstellung einen teilweisen Längsschnitt durch einen Gondelantrieb 1, der als Antriebseinrichtung für eine schwimmende oder tauchende Einrichtung, wie z.B. ein Schiff oder eine Offshore-Plattform, dient und hierzu um eine Achse A drehbar am Rumpf 2 der schwimmenden Einrichtung befestigt ist. Ein derartiger Gondelantrieb wird häufig auch als Ruderpropeller, Thruster oder als Pod-Antrieb bezeichnet und hat üblicherweise eine Antriebsleistung von 0,5 bis 30 MW.

Der Gondelantrieb 1 umfasst ein hydrodynamisch optimiert gestaltetes gondelförmiges Unterwassergehäuse 3, das mittels eines Schaftes 4 drehbar an dem Rumpf 2 der schwimmenden oder tauchenden Einrichtung angeordnet ist. Eine Propellerwelle 5 ist mittels Lager 6 drehbar innerhalb des Gehäuses 3 gelagert und aus dem Gehäuse 3 herausgeführt. Auf der Propellerwelle 5 sitzt zu beiden Enden jeweils ein außerhalb des Gehäuses 3 angeordneter Verstellpropeller 7. Die Propellerwelle 5 wird von einem ebenfalls innerhalb des Gehäuses 3 angeordneten elektrischen Motor 8 angetrieben. In diesem Ausführungsbeispiel werden die beiden Verstellpropeller 7 durch den Motor 8 gleichsinnig angetrieben. Es sind jedoch auch andere Ausführungsformen möglich. Beispielsweise können die beiden Propeller 7 mittels eines in dem Unterwassergehäuse 3 angeordneten Getriebes auch gegensinnig angetrieben werden. Statt eines einzigen elektrischen Motors 8 können auch zwei Rücken an Rücken in dem Unterwassergehäuse 3 angeordnete elektrische Motoren vorhanden sein, die jeweils über eine Propellerwelle nur einen einzigen der beiden Propeller 7 antreiben. Ebenso ist ein Gondelantrieb mit nur einem einzigen Propeller möglich. Der elektrische Motor zum Antrieb der Propellerwelle 5 kann sich auch außerhalb des Gehäuses 3 im Inneren der schwimmenden oder tauchenden Einrichtung befinden und über ein Getriebe (z.B. ein Tellerrad-Kegelrad-Getriebe) und eine durch den Schaft 4 verlaufende Vertikalwelle mit der Propellerwelle 5 gekoppelt sein (so genannte L-Anordnung oder Z-Anordnung).

Die Propellerwelle 5 weist an beiden Enden jeweils eine Propellernabe 9 mit einer Verstelleinrichtung 10 für die Steigung der Propellerblätter 11 der Propeller 7 auf. Durch die Verstelleinrichtung 10 ist die Steigung der Propellerblätter 11 hier beispielhaft für genau zwei unterschiedliche Betriebspunkte der schwimmenden Einrichtung einstellbar (beispielsweise für eine Eisfahrt und für eine Freifahrt). Die Verstelleinrichtung 11 ist deshalb derart ausgebildet, dass sie nur genau zwei unterschiedlichen Blattsteigungen erlaubt.

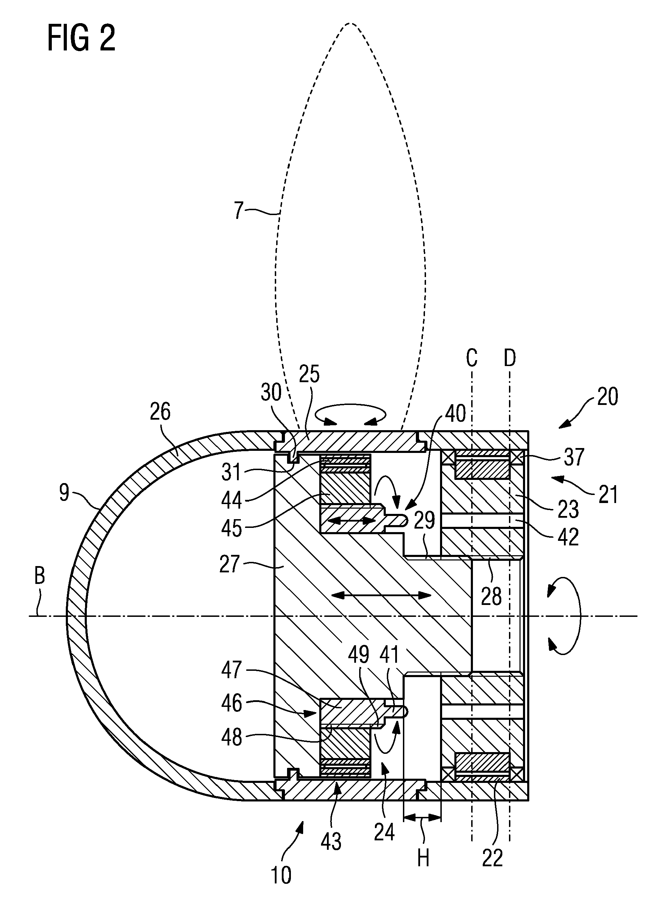

Der genaue Aufbau der Verstelleinrichtung 10 wird nun anhand von Figur 2 näher erläutert. Die Verstelleinrichtung 10 umfasst eine elektrische Antriebseinrichtung 20 zur Bewegung der Blätter 11 von der Blattsteigung für die Eisfahrt in die Blattsteigung für die Freifahrt bzw. zurück und eine elektrisch betätigbare Verriegelungseinrichtung 40 zur Verriegelung der Blätter 11 in der jeweiligen Blattsteigung.

Jedes Propellerblatt 11 weist an seinem Fuß einen Verstellteller 25 auf, der in nicht näher dargestellter Weise derart drehbar in der Nabe 9 gelagert ist, dass das Propellerblatt 11 um seine Längsachse drehbar ist und somit die Steigung des Propellerblattes 11 veränderbar ist.

Die elektrische Antriebseinrichtung 20 umfasst einen ersten elektrischen Ringmotor 21 (häufig auch als "RIM-Drive" bezeichnet) mit einem ringförmigen Stator 22 und einem mittels Lager 37 drehbar in einem Gehäuse 26 der Verstellnabe 9 gelagerten ringförmigen Läufer 23, die gleichachsig mit der Propellerwelle 5 bzw. der Drehachse B des Verstellpropellers 7 sind, und einen Antriebsmechanismus 24 zur Umwandlung einer Drehbewegung des Läufers 23 in eine Drehbewegung der Propellerblätter 7 um ihre Längsachse. Der Antriebsmechanismus 24 umfasst ein im Inneren des Gehäuses 26 der Verstellnabe 9 befindliches und in Richtung der Drehachse B der Propellerwelle zwischen einer ersten Position C und einer zweiten Position D bewegliches Joch 27 sowie die bereits erläuterten Verstellteller 25.

Das Joch 27 ist dabei (z.B. mittels Gleitschienen) in Bezug auf die Drehachse B in dem Gehäuse 26 verdrehfest gelagert. Der ringförmige Läufer 23 weist auf seiner Ringinnenseite ein Gewinde 28 auf, das mit einem Außengewinde 29 des Jochs 27 derart im Eingriff steht, dass eine Bewegung des Läufers 23 um die Drehachse B zu einer Bewegung des Jochs 27 in Richtung der Drehachse B führt. In Abhängigkeit von der Drehrichtung des Läufers 23 wird dabei das Joch 27 entweder in Richtung zu dem Ringmotor 21 oder in Richtung weg von dem Ringmotor 21 bewegt.

Jeder Verstellteller 25 für die Propellerblätter weist einen Mitnehmer 30 auf, der in eine in dem Joch 27 vorhandene ggf. radial umlaufende Führung 31 (z.B. mit Gleitstücken) ragt. Eine Bewegung des Jochs 27 in Richtung der Drehachse B führt somit zu einer Drehung der Verstellteller 25 und somit zu einer Veränderung der Steigung der Propellerblätter 11.

Durch einen Abstand H zwischen dem Joch 27 und dem Läufer 23 wird ein Hub für die Bewegung des Jochs 27 definiert. Befindet sich das Joch 27 in der dargestellten ersten Position C mit maximalem Hub, befinden sich die Verstellteller 25 und somit die Propellerblätter 11 in einer ersten Position, die z.B. der Position für eine Eisfahrt entspricht. Ist der Hub jedoch Null, d.h. das Joch 37 liegt stirnseitig an dem Läufer 23 an und befindet sich in der zweiten Position D, dann befinden sich die Verstellteller 25 sowie die Propellerblätter 11 in einer zweiten Position, die z.B. der Position für eine Freifahrt entspricht.

Nach einer Bewegung des Jochs 27 in die erste oder zweite Position C bzw. D wird das Joch 27 in dieser jeweiligen Position durch eine Verriegelungseinrichtung 40 gegen eine Bewegung um die Achse B und auch in Richtung der Achse B verriegelt. Die Verriegelungseinrichtung 40 umfasst in Richtung der Drehachse B der Propellerwelle 5 bewegbare Bolzen 41 und in dem Läufer 23 des ersten Ringmotors 21 vorhandene Öffnungen bzw. Bohrungen 42 zur Aufnahme der Bolzen 41. Zur elektrisch betätigten Verriegelung umfasst die Verriegelungseinrichtung 40 einen zweiten elektrischen Ringmotor 43 mit einem ringförmigen Stator 44 und einem ringförmigen Läufer 45, die gleichachsig mit der Propellerwelle 5 bzw. der Drehachse B sind, und einen Antriebsmechanismus 46 zur Umwandlung einer Drehbewegung des Läufers 45 in eine Bewegung der Bolzen 41 in Richtung der Drehachse B der Propellerwelle 5.

Der Antriebsmechanismus umfasst daher einen (z.B. mittels Gleitschienen) in Bezug auf das Joch 27 verdrehfest auf dem Joch 27 gelagerten Ring 47, auf dem die Bolzen 41 gleichmäßig verteilt angeordnet sind.

Der ringförmige Läufer 45 weist auf seiner Ringinnenseite ein Gewinde 48 auf, das mit einem Außengewinde 49 des Rings 47 derart im Eingriff steht, dass eine Bewegung des Läufers 45 um die Drehachse B zu einer Bewegung des Rings 47 und damit der Bolzen 41 in Richtung der Drehachse B führt. In Abhängigkeit von der Drehrichtung des Läufers 45 wird dabei der Ring 47 mit den Bolzen 41 entweder in Richtung zu dem Ringmotor 21 oder in Richtung weg von dem Ringmotor 21 bewegt.

Mit Hilfe des zweiten Ringmotors 43 können somit die Bolzen 41 in Richtung der Drehachse B von einer ersten in FIG 2 dargestellten Position, in der sie sich außerhalb der Bohrungen 42 befinden, in eine zweite Position, in der sie formschlüssig von den Bohrungen 42 aufgenommen sind, bewegt werden bzw. umgekehrt. Durch einen derartigen Formschluss werden das Joch 27 sowie die Blätter mit ihrer jeweiligen Blattsteigung fixiert und verriegelt.

Die Verstelleinrichtung 10 ist dabei derart ausgebildet, dass bei einer Bewegung der Blätter durch die elektrische Antriebseinrichtung 20 die Verriegelungseinrichtung 40 deaktiviert ist und somit keine elektrische Energie verbraucht und umgekehrt bei einer Verriegelung der Blattsteigung durch die Verriegelungseinrichtung 40 die elektrische Antriebseinrichtung 20 deaktiviert ist und somit keine elektrische Energie verbraucht. Der elektrische Energieverbrauch kann damit sehr klein gehalten werden. Es ist hierdurch möglich, die elektrische Energie induktiv zu der Verstelleinrichtung 10 zu übertragen.

Der Gondelantrieb 1 umfasst hierzu eine nicht näher dargestellte Energieübertragungseinrichtung zur induktiven Übertragung von elektrischer Energie aus einem Innenraum des Gondelgehäuses 3 zu der Verstelleinrichtung 10. Hierzu stehen dem Fachmann mehrere ihm geläufige Möglichkeiten zur Verfügung, z.B. kann für jeden der Ringmotoren 21, 43 zur Energieübertragung jeweils ein Spulenpaar (jeweils eine in der Verstellnabe 9 angeordnete Spule und eine in dem Innenraum des Gondelgehäuses 3 angeordnete Spule, wobei letztere mit Wechselstrom erregt wird), vorhanden sein.

Der Energiebedarf und Platzbedarf der Ringmotoren 21, 43 kann dabei noch weiter verringert werden, wenn die Ringmotoren 21, 43 einen permanentmagnetisch erregten Läufer aufweisen.

Für einen möglichst geringen elektrischen Energiebedarf der Ringmotoren erfolgt die Änderung der Blattsteigung bevorzugt nicht unter Propellerlast, sondern in einem lastlosen Betriebszustand, d.h. allein angetrieben von der an dem Propeller vorbeiströmenden Wasserströmung.

Für die Antriebseinrichtung 20 und die Verriegelungseinrichtung 40 bestehen natürlich auch eine Vielzahl anderer möglicher Ausführungsformen. So können statt elektrischer Ringmotoren auch konventionelle elektrische Motoren und Antriebsmechanismen auf Basis von Zahnrädern genutzt werden.

Weiterhin kann der Antriebsmechanismus auch ein um die Drehachse der Propellerwelle drehbares Joch umfassen. Wenn der Läufer des elektrischen Ringmotors drehfest mit dem Joch verbunden ist, kann durch eine Drehung des Läufers eine Drehung des Jochs und somit eine Drehbewegung der Propellerblätter bewirkt werden.

Alternativ kann die elektrische Antriebseinrichtung auch zumindest einen elektrischen Linearmotor mit einem Läufer und einem Stator sowie einen Antriebsmechanismus zur Umwandlung einer Linearbewegung des Läufers in eine Drehbewegung der Propellerblätter um ihre Längsachse aufweisen. Die Verriegelungseinrichtung kann dann eine in Umfangsrichtung der Drehachse der Propellerwelle drehbare Scheibe zur Fixierung des Antriebsmechanismus oder des Linearmotors in Bezug auf eine Bewegung in Richtung der Drehachse der Propellerwelle aufweisen.

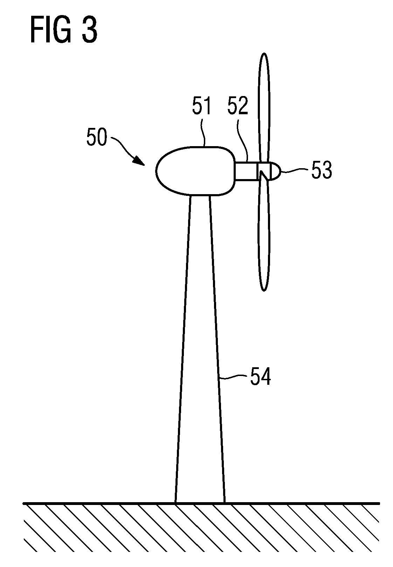

FIG 3 zeigt vereinfacht eine Windenergieanlage 50 mit einem Turm 54, auf dem ein Gondelgehäuse 51 sitzt, in dem eine Repellerwelle 52 drehbar gelagert ist und einen Generator antreibt. An einem Ende der Repellerwelle 52 ist ein Verstellrepeller 53 angeordnet, dessen prinzipieller Aufbau identisch ist mit dem in Zusammenhang mit FIG 1 und 2 erläuterten Verstellpropeller für einen Gondelantrieb.

## Patentansprüche

1. Verstellpropeller (7) oder -repeller (53) mit einer Nabe (9) mit daran befestigten Propeller- bzw. Repellerblättern (11) mit veränderbarer Steigung und mit einer Verstelleinrichtung (10) zur Veränderung der Steigung der Propeller- bzw. Repellerblätter (11), wobei die Verstelleinrichtung (10) in der Nabe (9) angeordnet ist; **dadurch gekennzeichnet,dass** die Verstelleinrichtung derart ausgebildet ist, dass sie nur eine zahlenmäßig begrenzte Anzahl von unterschiedlichen Blattsteigungen, vorzugsweise nur genau zwei Blattsteigungen, erlaubt, wozu die Verstelleinrichtung (10)
- eine elektrische Antriebseinrichtung (20) zur Bewegung der Blätter (11) von einer ersten zu einer zweiten der zahlenmäßig begrenzten Anzahl von Blattsteigungen und
- eine elektrisch betätigbare Verriegelungseinrichtung (40) zur Verriegelung der Blätter (11) in der zahlenmäßig begrenzten Anzahl unterschiedlicher Blattsteigungen umfasst.

2. Verstellpropeller (7) oder -repeller (53) nach Anspruch 1, **dadurch gekennzeichnet, dass** die elektrische Antriebseinrichtung (20) einen ersten elektrischen Ringmotor (21) mit einem ringförmigen Stator (22) und einem ringförmigen Läufer (23), die gleichachsig mit der Drehachse (B) des Verstellpropellers (7) oder -repellers (53) sind, und einen Antriebsmechanismus (24) zur Umwandlung einer Drehbewegung des Läufers (22) in eine Drehbewegung der Blätter (11) um ihre Längsachse aufweist.

3. Verstellpropeller (7) oder -repeller (53) nach Anspruch 2, **dadurch gekennzeichnet, dass** der Antriebsmechanismus (24) ein in Richtung der Drehachse (B) bewegliches Joch (27) umfasst.

4. Verstellpropeller (7) oder -repeller (53) nach Anspruch 2, **dadurch gekennzeichnet, dass** der Antriebsmechanismus (24) ein um die Drehachse (B) drehbares Joch (27) umfasst.

5. Verstellpropeller (7) oder -repeller (53) nach einem der Ansprüche 2 bis 4, **dadurch gekennzeichnet, dass** die Verriegelungseinrichtung (40) in Richtung der Drehachse (B) bewegbare Bolzen (41) umfasst und der Läufer (23) des ersten Ringmotors (21) Öffnungen (42) zur Aufnahme der Bolzen (41) aufweist.

6. Verstellpropeller (7) oder -repeller (53) nach Anspruch 5, **dadurch gekennzeichnet, dass** die Verriegelungseinrichtung (40) zur elektrischen Betätigung einen zweiten elektrischen Ringmotor (43) mit einem ringförmigen Stator (44) und einem ringförmigen Läufer (45), die gleichachsig mit der Drehachse (B) des Verstellpropellers (7) bzw. -repellers (53) sind, und einen Antriebsmechanismus (46) zur Umwandlung einer Drehbewegung des Läufers (45) in eine Bewegung der Bolzen (41) in Richtung der Drehachse (B) umfasst.

7. Verstellpropeller (7) oder -repeller (53) nach Anspruch 1, **dadurch gekennzeichnet, dass** die elektrische Antriebseinrichtung zumindest einen elektrischen Linearmotor mit einem Läufer und einem Stator sowie einen Antriebsmechanismus zur Umwandlung einer Linearbewegung des Läufers in eine Drehbewegung der Blätter um ihre Längsachse aufweist.

8. Verstellpropeller (7) oder -repeller (53) nach Anspruch 7, **dadurch gekennzeichnet, dass** die Verriegelungseinrichtung eine in Umfangsrichtung der Drehachse drehbare Scheibe zur Fixierung des Antriebsmechanismus oder des Linearmotors in Bezug auf eine Bewegung in Richtung der Drehachse aufweist.

9. Verstellpropeller (7) oder -repeller (53) nach einem der vorhergehenden Ansprüche, **gekennzeichnet durch** eine Energieübertragungseinrichtung zur induktiven Übertragung von elektrischer Energie von außerhalb des Verstellpropellers bzw. - repellers zu der Verstelleinrichtung (10).

10. Verstellpropeller (7) oder -repeller (53) nach einem der vorhergehenden Ansprüche, **dadurch gekennzeichnet, dass** die Verstelleinrichtung (10) derart ausgebildet ist, dass bei einer Bewegung der Blätter (11) durch die elektrische Antriebseinrichtung (20) die Verriegelungseinrichtung (40) deaktiviert ist und bei einer Verriegelung der Blattsteigung durch die Verriegelungseinrichtung (40) die elektrische Antriebseinrichtung (20) deaktiviert ist.

11. Gondelantrieb (1) zum Antrieb einer schwimmenden Einrichtung umfassend:
- ein Unterwassergehäuse (3) mit einer darin drehbar gelagerten Propellerwelle (5) und
- einem an einem Ende der Propellerwelle (5) angeordneten Verstellpropeller (7) nach einem der vorhergehenden Ansprüche.

12. Gondelantrieb (1) nach einem der vorhergehenden Ansprüche, **gekennzeichnet durch** einen in dem Gehäuse (3) angeordneten elektrischen Motor (8) zum Antrieb der Propellerwelle (5).

13. Gondelantrieb (1) nach einem der vorhergehenden Ansprüche, **dadurch gekennzeichnet, dass** der elektrische Motor (8) als ein permanentmagnetisch erregter Motor ausgebildet ist

14. Gondelantrieb (1) nach einem der vorhergehenden Ansprüche, **gekennzeichnet durch** einen an dem anderen Ende der Propellerwelle (5) angeordneten weiteren Verstellpropeller (7) nach einem der Ansprüche 1 bis 10.

15. Windenergieanlage (50) umfassend:
- ein Gondelgehäuse (51) mit einer darin drehbar gelagerten Repellerwelle (52) und
- einem an einem Ende der Repellerwelle (52) angeordneten Verstellrepeller (53) nach einem der vorhergehenden Ansprüche.

## Claims

1. Variable-pitch propeller (7) or repeller (53) having a hub (9) with propeller or repeller blades (11) of variable pitch fastened thereto and having a pitch adjusting facility (10) for changing the pitch of the propeller or repeller blades (11),
wherein the pitch adjusting facility (10) is disposed in the hub (9), **characterised in that** the pitch adjusting facility (10) is configured so that it only allows a numerically limited number of different blade pitches, preferably only two blade pitches, to which end the pitch adjusting facility (10)
- comprises an electric drive facility (20) for moving the blades (11) from a first to a second of the numerically limited number of blade pitches and
- an electrically actuatable locking facility (40) for locking the blades (11) in the numerically limited number of different blade pitches.

2. Variable-pitch propeller (7) or repeller (53) according to claim 1, **characterised in that** the electric drive facility (20) has a first electric ring motor (21) having an annular stator (22) and an annular rotor (23), which have the same axis as the rotation axis (B) of the variable-pitch propeller (7) or repeller (53), and a drive mechanism (24) for converting a rotational movement of the rotor (22) to a rotational movement of the blades (11) about their longitudinal axis.

3. Variable-pitch propeller (7) or repeller (53) according to claim 2, **characterised in that** the drive mechanism (24) comprises a yoke (27) that can move in the direction of the rotation axis (B).

4. Variable-pitch propeller (7) or repeller (53) according to claim 2, **characterised in that** the drive mechanism (24) comprises a yoke (27) that can be rotated about the rotation axis (B).

5. Variable-pitch propeller (7) or repeller (53) according to one of claims 2 to 4, **characterised in that** the locking facility (40) comprises bolts (41) that can be moved in the direction of the rotation axis (B) and the rotor (23) of the first ring motor (21) has openings (42) to accommodate the bolts (41).

6. Variable-pitch propeller (7) or repeller (53) according to claim 5, **characterised in that** for electrical actuation the locking facility (40) comprises a second electric ring motor (43) having an annular stator (44) and an annular rotor (45), which have the same axis as the rotation axis (B) of the variable-pitch propeller (7) or repeller (53), and a drive mechanism (46) for converting a rotational movement of the rotor (45) to a movement of the bolts (41) in the direction of the rotation axis (B).

7. Variable-pitch propeller (7) or repeller (53) according to claim 1, **characterised in that** the electric drive facility has at least one electric linear motor having a rotor and a stator and a drive mechanism for converting a linear movement of the rotor to a rotational movement of the blades about their longitudinal axis.

8. Variable-pitch propeller (7) or repeller (53) according to claim 7, **characterised in that** the locking facility has a disk, which can be rotated in the peripheral direction of the rotation axis, to fix the drive mechanism or linear motor in respect of a movement in the direction of the rotation axis.

9. Variable-pitch propeller (7) or repeller (53) according to one of the preceding claims, **characterised by** an energy transfer facility for the inductive transfer of electrical energy from outside the variable-pitch propeller or repeller to the pitch adjusting facility (10).

10. Variable-pitch propeller (7) or repeller (53) according to one of the preceding claims, **characterised in that** the pitch adjusting facility (10) is configured so that when the blades (11) are moved by the electric drive facility (20), the locking facility (40) is deactivated and when the blade pitch is locked by the locking facility (40), the electric drive facility (20) is deactivated.

11. Nacelle drive (1) for driving a floating facility, comprising:
- an underwater housing (3) having a propeller shaft (5) supported rotatably therein and
- a variable-pitch propeller (7) according to one of the preceding claims disposed on one end of the propeller shaft (5).

12. Nacelle drive (1) according to one of the preceding claims, **characterised by** an electric motor (8) disposed in the housing (3) for driving the propeller shaft (5).

13. Nacelle drive (1) according to one of the preceding claims, **characterised in that** the electric motor (8) is configured as a permanent-magnet motor.

14. Nacelle drive (1) according to one of the preceding claims, **characterised by** a further variable-pitch propeller (7) according to one of claims 1 to 10 disposed on the other end of the propeller shaft (5).

15. Wind energy system (50) comprising:
- a nacelle housing (51) having a repeller shaft (52) supported rotatably therein and
- a variable-pitch repeller (53) according to one of the preceding claims disposed on one end of the repeller shaft (52).

## Revendications

1. Hélice ( 7 ) ou roue ( 53 ) à pales, réglable, comprenant un moyeu ( 9 ) ayant des pales ( 11 ) à pas variable d'hélice ou de roue, qui sont fixées, et ayant un dispositif ( 10 ) de réglage pour modifier le pas des pales ( 11 ) d'hélice ou de roue,
dans lequel le dispositif ( 10 ) de réglage est disposé dans le moyeu ( 9 ), **caractérisé en ce que** le dispositif de réglage est constitué de manière à permettre seulement un nombre limité numériquement de pas des pales différents, de préférence seulement exactement deux pas de pales, le dispositif ( 10 ) de réglage comprenant à cet effet
- un dispositif ( 20 ) électrique d'entraînement pour le déplacement des pales ( 11 ) d'un premier à un deuxième nombre limité numériquement des pas des pales et
- un dispositif ( 40 ) de verrouillage pouvant être actionné électriquement pour le verrouillage des pales ( 11 ) dans le nombre limité numériquement de pas des pales différents.

2. Hélice ( 7 ) ou roue ( 53 ) à pales réglable suivant la revendication 1,
**caractérisée en ce que** le dispositif ( 20 ) électrique d'entraînement a un premier moteur ( 21 ) annulaire électrique ayant un stator ( 22 ) annulaire et un rotor ( 23 ) annulaire qui ont le même axe que l'axe ( B ) de rotation de l'hélice ( 7 ) ou de la roue ( 53 ) réglable, et un mécanisme ( 24 ) d'entraînement pour transformer un mouvement de rotation du rotor ( 22 ) en un mouvement de rotation des pales ( 11 ) autour de son axe longitudinal.

3. Hélice ( 7 ) ou roue ( 53 ) à pales réglable suivant la revendication 2,
**caractérisée en ce que** le mécanisme ( 24 ) d'entraînement comprend une culasse ( 27 ) mobile dans la direction de l'axe ( B ) de rotation.

4. Hélice ( 7 ) ou roue ( 53 ) à pales réglable suivant la revendication 2,
**caractérisée en ce que** le mécanisme ( 24 ) d'entraînement comprend une culasse ( 27 ) mobile tournant autour de l'axe ( B ) de rotation.

5. Hélice ( 7 ) ou roue ( 53 ) à pales réglable suivant l'une des revendications 2 à 4,
**caractérisée en ce que** le dispositif ( 40 ) de verrouillage comprend un axe ( 41 ) mobile dans la direction de l'axe ( B ) de rotation et le rotor ( 23 ) du premier moteur ( 21 ) annulaire a des ouvertures ( 42 ) de réception de l'axe ( 41 ).

6. Hélice ( 7 ) ou roue ( 53 ) à pales réglable suivant la revendication 5,
**caractérisée en ce que** le dispositif ( 40 ) de verrouillage comprend, pour l'actionnement électrique, un deuxième moteur ( 43 ) annulaire électrique ayant un stator ( 44 ) annulaire et un rotor ( 45 ) annulaire de même axe que l'axe ( B ) de rotation de l'hélice ( 7 ) ou de la roue ( 53 ) réglable, et un mécanisme ( 46 ) d'entraînement pour transformer un mouvement de rotation du rotor ( 45 ) en un mouvement de l'axe ( 41 ) dans la direction de l'axe de ( B ) de rotation.

7. Hélice ( 7 ) ou roue ( 53 ) à pales réglable suivant la revendication 1,
**caractérisée en ce que** le dispositif électrique d'entraînement a au moins un moteur électrique linéaire ayant un rotor et un stator, ainsi qu'un mécanisme d'entraînement pour transformer un mouvement linéaire du rotor en un mouvement de rotation des pales autour de son axe longitudinal.

8. Hélice ( 7 ) ou roue ( 53 ) à pales réglable suivant la revendication 7,
**caractérisée en ce que** le dispositif de verrouillage a un disque tournant dans la direction périphérique de l'axe de rotation pour immobiliser le mécanisme d'entraînement ou le moteur linéaire par rapport à un déplacement dans la direction de l'axe de rotation.

9. Hélice ( 7 ) ou roue ( 53 ) à pales réglable suivant l'une des revendications précédentes,
**caractérisée par** un dispositif de transmission d'énergie pour la transmission par induction d'énergie électrique de l'extérieur de l'hélice ou de la roue réglable au dispositif ( 10 ) de réglage.

10. Hélice ( 7 ) ou roue ( 53 ) à pales réglable suivant l'une des revendications précédentes,
**caractérisée en ce que** le dispositif ( 10 ) de réglage est constitué de manière à, lors d'un déplacement des pales ( 11 ) par le dispositif ( 20 ) électrique d'entraînement, désactiver le dispositif ( 40 ) de verrouillage, et lors d'un verrouillage du pas des pales par le dispositif ( 40 ) de verrouillage, désactiver le dispositif ( 20 ) électrique d'entraînement.

11. Entraînement ( 1 ) de gondole pour l'entraînement d'un dispositif flottant, comprenant
- une enveloppe ( 3 ) sous l'eau ayant un arbre ( 5 ) d'hélice qui est monté tournant et
- une hélice ( 7 ) réglable montée à un bout de l'arbre ( 5 ) de l'hélice suivant l'une des revendications précédentes.

12. Entraînement ( 1 ) de gondole suivant l'une des revendications précédentes,
**caractérisé par** un moteur ( 8 ) électrique disposé dans l'enveloppe ( 3 ) pour entraîner l'arbre ( 5 ) de l'hélice.

13. Entraînement ( 1 ) de gondole suivant l'une des revendications précédentes,
**caractérisé en ce que** le moteur ( 8 ) électrique est constitué sous la forme d'un moteur à excitation par aimant permanent.

14. Entraînement ( 1 ) de gondole suivant l'une des revendications précédentes,
**caractérisé par** une autre hélice ( 7 ) réglable suivant l'une des revendications 1 à 10 montée à l'autre bout de l'arbre ( 5 ) de l'hélice.

15. Eolienne ( 50 ) comprenant :
- une enveloppe ( 51 ) de gondole ayant un arbre ( 52 ) de roue à pales qui y est montée tournante et
- une roue ( 53 ) à pales réglable suivant l'une des revendications précédentes, montée à un bout de l'arbre ( 52 ) de la roue à pales.
